# EUROPÄISCHE PATENTANMELDUNG

(11) **EP 4 458 728 A1**
(43) Veröffentlichungstag der Anmeldung: **06.11.2024**
(21) Anmeldenummer: 24169143.5
(22) Anmeldetag: 09.04.2024
(51) Int. Cl.: B65D 88/64, B65G 47/44, B65G 69/08, B65G 65/42

(54) **AUSTRAGUNGSSYSTEM ZUM AUSTRAGEN VON FÖRDERGUT**

(30) Priorität: 03.05.2023 DE 202023102387 U
(71) Anmelder: Loibl Förderanlagen GmbH, 94315 Straubing (DE)
(72) Erfinder: Zeitler, Karl, 84061 Ergoldsbach (DE)
(74) Vertreter: Glück Kritzenberger Patentanwälte PartGmbB

(57) **Zusammenfassung**

Die Erfindung betrifft ein Austragungssystem (1) zum Austragen von Fördergut, insbesondere Elektro- und Elektronikschrott, aus einem Bunkerbehälter, umfassend einen Aufnahmebehälter (10) zur Aufnahme von Fördergut aus dem Bunkerbehälter mit einer oberen Zuführungsöffnung (12) und einer dieser gegenüberliegenden, unteren Austragsöffnung (14), zumindest eine unterhalb der Austragsöffnung (14) angeordnete, vorzugsweise horizontale, Fördereinrichtung (20) zum Abfördern des aus der Austragsöffnung (14) des Aufnahmebehälters (10) austretenden Förderguts und eine Druckentlastungs- und Dosiereinrichtung (30) zur Druckentlastung im Aufnahmebehälter (10) sowie zur Dosierung und/oder Vereinzelung des Förderguts. Die Druckentlastungs- und Dosiereinrichtung (30) weist zumindest ein erstes balkenförmiges Dosierelement (40) und zweites balkenförmiges Dosierelement (42) auf, die im Aufnahmebehälter (10) zwischen der Zuführungsöffnung (12) und der Austragsöffnung (14), insbesondere im Bereich oberhalb der Austragsöffnung (14), angeordnet sind. Das erste balkenförmige Dosierelement (40) ist um eine erste Längsachse (LA1) und das zweite balkenförmige Dosierelement (42) um eine zweite Längsachse (LA2) motorisch antreibbar, und zwar vorzugsweise unabhängig voneinander. Das erste und zweite balkenförmige Dosierelement (40, 42) sid horizontal beabstandet zueinander, auf unterschiedlichen Höhenniveaus im Aufnahmebehälter (10) angeordnet.

## Beschreibung

### Technisches Gebiet

Die Erfindung bezieht sich auf ein Austragungssystem zum Austragen von Fördergut, insbesondere Elektro- und Elektronikschrott, aus einem Bunkerbehälter. Mit dem erfindungsgemäßen Austragungssystem kann das Fördergut aus dem Bunkerbehälter trotz schlechter oder schwieriger Fließeigenschaften gleichmäßig und dosiert entnommen werden und so dann nachfolgenden Behandlungs- oder Verarbeitungs- oder Arbeitsstationen, wie z.B. Sortier- und/oder Aufbereitungsanlagen, Schreddern bzw. Zerkleinerungsanlagen oder Schmelzöfen mit unterschiedlichen Hitze- oder Temperaturzonen, eine vordefinierte Menge an Fördergut bereitgestellt werden.

### Stand der Technik

In allen Bereichen der Industrie müssen Fördergüter bzw. Materialien - auch solche mit schwierigen Fließeigenschaften - teilweise in vollautomatischem Betrieb gefördert, gelagert und entladen werden. Zur Aufnahme, Speicherung und gleichmäßigen Weitergabe unterschiedlicher Fördergüter bzw. Materialien werden häufig Bunker bzw. Bunkerbehälter verwendet, da diese ein großes Fassungsvolumen haben und die aufgenommenen Fördergüter wieder abgeben können. Um eine dosierte und gleichmäßige Abgabe des Förderguts zu erreichen, werden in der Praxis abhängig vom Fördergut und von der Bunkerform unterschiedlichste Austragungssysteme eingesetzt. Handelt es sich beispielsweise bei dem Fördergut um Schüttgut, wie beispielsweise Schotter, Kies, Sand, Gips, Zement, Schlacke, Pellets oder Hackschnitzel, so hängt die Austragung des Schüttguts durch ein Austragungssystem im Wesentlichen von Faktoren wie Schüttgutdichte, Korngröße, Kornform, Feuchtigkeit und weiteren Parametern ab.

Eine derartige Vorrichtung zum Austragen von Schüttgut, insbesondere pulverförmigen oder feinkörnigen Gut, aus einem Behälter ist beispielsweise aus der DE 26 42 002 A1 bekannt. Die Vorrichtung weist einen Behälter zur Aufnahme des pulverförmigen oder feinkörnigen Guts auf, welcher nach unten abschließend mit einem Rost aus parallelen und horizontal angeordneten Roststäben ausgestattet ist. Die zwei oder mehreren Roststäbe weisen vorzugsweise einen eckigen Querschnitt auf und sind drehbeweglich im Behälter gelagert, wobei die Roststäbe einerseits gleichsinnig mit gleicher Frequenz drehschwingend antreibbar sind, andererseits die Roststäbe einzeln oder gruppenweise mit verschiedenen Schwingungsweiten bzw. Amplituden antreibbar sind, wobei die verschiedenen Schwingungsweiten vorzugsweise durch Kurbelarme mit unterschiedlicher Länge erreicht werden. Aufgrund der dadurch erzielten verschieden großen Spaltweiten zwischen den Roststäben sind die Durchsatzmengen im Bereich der einzelnen Roststäbe unterschiedlich, was unter anderem zu einer Zerstörung der vorhandenen Schüttgutschichten im Behälter führt. Somit wird mit den Roststäben eine Durchmischung der Schüttgutschichten einerseits, und eine Dosierung des Schüttguts andererseits gewährleistet. In der Ruhelage bzw. Grundstellung sind die Roststäbe dagegen derart positioniert, dass kein Schüttgut zwischen den Roststäben hindurchrieseln kann, d.h. die Roststäbe bilden in der Grundstellung einen Art Behälterverschluss.

In der EP 3 535 203 B1 ist ferner ein Silo zum Begasen von Schüttgut offenbart, umfassend einen Behälter zur Aufnahme von Schüttgut mit einem Einlass und einem Auslass, und zumindest einen Ventilschieber, der im Behälter zwischen dem Einlass und dem Auslass angeordnet ist und dazu ausgebildet ist, eine vordefinierte Menge an Schüttgut pro Zeiteinheit in Fließrichtung vom Einlass zum Auslass fließen zu lassen. Ferner ist am Behälter eine Gaseintrittsöffnung zum Einleiten von Gas in den Behälter und eine oder mehrere Gasaustrittsöffnungen zum Ableiten des Gases vorgesehen, wobei das Gas im Wesentlichen gegen die Fließrichtung des Schüttguts durch den Behälter strömt. Durch die Beaufschlagung des Schüttguts kann dieses beispielsweise getrocknet, gekühlt oder vorbehandelt werden. Vorzugsweise sind zwei oder mehr Ventilschieber vorgesehen, die derart angeordnet sind, dass diese nebeneinander und parallel zueinander in einer horizontalen Ebene liegen. Die Ventilschieber sind dabei als langestreckte Profilkörper, vorzugsweise Rohr- oder Vollprofile, mit einem unrunden bzw. eckigen Querschnitt ausgebildet und können um ihre Längsachse oszillierend angetrieben werden, wobei durch die Oszillationsbewegung Verklumpungen des Schüttguts im Behälter reduziert oder bereits bestehende Verklumpungen wieder gelöst werden können. Die Ventilschieber dienen jedoch auch dazu, den Durchfluss von Schüttgut am Auslass vollständig abzusperren bzw. den Auslass zu verschließen.

Neben der Austragung von Fördergut durch einen Kipp- oder Drehbalkenboden werden in der Praxis vor allem Dosierschnecken, oftmals auch mit Vibrationsunterstützung, verwendet. Auch wenn sich diese Austragungssysteme zum Austragen von Schüttgüter gut eignen, so haben diese Austragungssysteme mit Fördergut, wie z.B. Elektro- und Elektronikschrott, welches äußerst schwierige Fließeigenschaften aufweist, große Probleme oder sind schlichtweg nicht dafür geeignet.

Bei Elektro- und Elektronikschrott (kurz "E-Schrott" oder "E-Müll"), die beispielsweise elektronische Bauteile wie bestückte Leiterplatten oder Platinen etc. umfassen, kommt es im Bunkerbehälter bzw. Bunker regelmäßig zu einem Verhaken der elektronischen Bauteile ineinander und/oder zur Bildung von größeren Klumpen oder Knäuel. Größere Klumpen oder Knäuel, aber auch die Vielzahl an elektronischen Bauteilen, welche sich in der Regel in ihrer Größe, Dimensionierung und Beschaffenheit unterscheiden, führen beim Entladen des Bunkers dazu, dass es im Bereich der Austragsöffnung des Bunkers regelmäßig zu einer Brückenbildung oder einem Verklemmen und Verkeilen des Förderguts, wodurch Störungen de Förderanlage entstehen. Dabei wird die Austragsöffnung teilweise oder sogar vollständig durch das Fördergut verstopft. Eine teilweise oder vollständige Verstopfung der Austragsöffnung bewirkt auch, dass der Staudruck im Bunker ansteigt. Ein weiteres Problem stellt die Dosiergenauigkeit dar, welche bei Fördergut mit schlechten Fließeigenschaften, wie bei Elektro- und Elektronikschrott, nur bedingt gewährleistet werden kann. Ferner kann es dazu kommen, dass beim Abfördern des Förderguts mittels einer Fördereinrichtung das Fördergut teilweise noch ineinander verhakt ist und dadurch eine Klumpenbildung entsteht. Im Bereich des Abwurfs der Fördereinrichtung kommt es dann dazu, dass das Fördergut klumpenweise oder großstückig abbricht. Unter diesen von der Fördereinrichtung abfallenden Klumpen oder Verbände von Fördergut, welche teils ein sehr hohes Gewicht aufweisen, leidet wiederum die Dosiergenauigkeit des Austragungssystems.

### Darstellung der Erfindung

Aufgabe der vorliegenden Erfindung ist es daher ein neuartiges Austragungssystem zur Verfügung zu stellen, das die Nachteile des Standes der Technik überwindet. Das erfindungsgemäße Austragungssystem soll einen gleichmäßigen und kontinuierlichen Material- bzw. Fördergutstrom sowie eine möglichst hohe Dosiergenauigkeit gewährleisten und zudem robust und widerstandsfähig gegenüber äußeren Einflüssen sein. Diese Aufgabe wird erfindungsgemäß durch ein Austragungssystem gemäß dem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Das erfindungsgemäße Austragungssystem zum Austragen von Fördergut, insbesondere Elektro- und Elektronikschrott, aus einem Bunkerbehälter, umfasst einen Aufnahmebehälter zur Aufnahme von Fördergut aus dem Bunkerbehälter mit einer oberen Zuführungsöffnung und einer dieser gegenüberliegenden, unteren Austragsöffnung, zumindest eine unterhalb der Austragsöffnung angeordnete, vorzugweise horizontale, Fördereinrichtung zum Abfördern des aus der Austragsöffnung des Aufnahmebehälters austretenden Förderguts und eine Druckentlastungs- und Dosiereinrichtung zur Druckentlastung im Aufnahmebehälter sowie zur Dosierung und/oder Vereinzelung des Förderguts. Die Druckentlastungs- und Dosiereinrichtung weist dabei zumindest ein erstes balkenförmiges Dosierelement und zweites balkenförmiges Dosierelement auf, die im Aufnahmebehälter zwischen der Zuführungsöffnung und der Austragsöffnung, insbesondere im Bereich oberhalb der Austragsöffnung, angeordnet sind, wobei das erste balkenförmige Dosierelement um eine erste Längsachse und das zweite balkenförmige Dosierelement um eine zweite Längsachse motorisch antreibbar sind, und zwar vorzugsweise unabhängig voneinander, und wobei das erste und zweite balkenförmige Dosierelement horizontal beabstandet zueinander, auf unterschiedlichen Höhenniveaus im Aufnahmebehälter angeordnet sind.

Ein besonderer Vorteil des erfindungsgemäßen Austragungssystems ist darin zu sehen, dass durch die spezielle Ausgestaltung der Druckentlastungs- und Dosiereinrichtung ein kontinuierlicher und gleichmäßiger Fördergutstrom bzw. Materialstrom aus der Austragsöffnung des Aufnahmebehälters erzielt werden kann. Insbesondere wird durch die erfindungsgemäße Druckentlastungs- und Dosiereinrichtung erreicht, dass das Fördergut während der Entladung des Bunkers fortlaufend über die gesamte Austragsöffnung bzw. den gesamten Austragsquerschnitt des Aufnahmebehälters ausgetragen werden kann. So genannte "Totzonen", in denen Fördergut sich nicht mehr bewegt, und folglich den nutzbaren Austragsquerschnitt verkleinert, können dadurch effektiv vermieden werden.

Hierzu sind zumindest ein erstes balkenförmiges Dosierelement und zweites balkenförmiges Dosierelement vorgesehen, welche jeweils um ihre Längsachse motorisch antreibbar sind, und welche derart innerhalb des Aufnahmebehälters angeordnet sind, dass sich diese horizontal beabstandet zueinander, auf unterschiedlichen Höhenniveaus befinden. Ausgehend von einer horizontalen Ebene, welche durch die Bodenfläche oder durch die in der horizontalen verlaufenden Transportebene der Fördereinrichtung gebildet sein kann, weisen die balkenförmigen Dosierelemente unterschiedliche Höhenniveaus oder -lagen auf, d.h. das erste Dosierelement liegt auf einer ersten Höhe, während das zweite Dosierelement auf einer zweiten Höhe liegt, wobei die Höhe des ersten Dosierelement geringer ist als die Höhe des zweiten Dosierelements, oder umgekehrt. Demnach kann durch die auf unterschiedlichen Höhenniveaus angeordneten und motorisch angetriebenen Dosierelemente auf das Fördergut bzw. den Fördergutstrom in unterschiedlichen Höhen bzw. Schichthöhen eingewirkt werden, wodurch das Entstehen von "Totzonen" oder eine Brückenbildung effektiv verhindert wird, so da eine kontinuierliche Förderung des Fördergutes möglich ist.

Ferner ist das erste und zweite Dosierelement in horizontaler Richtung beabstandet zueinander angeordnet, wobei der Abstand je nach Art, Größe, Beschaffenheit des Förderguts und/oder Größe des Dosierelements und/oder Größe und Bauform des Aufnahmebehälters sowie Größe der Austragsöffnung gewählt sein kann. Vorzugsweise entspricht der horizontale Abstand zwischen den beiden Dosierelementen mindestens dem des Querschnitts eines Dosierelements. Der horizontale Abstand zwischen dem ersten und zweiten Dosierelement kann jedoch auch größer sein und beispielsweise dem doppelten oder dreifachen Querschnitt eines Dosierelements entsprechen.

Die Menge an Fördergut, welche durch die Austragsöffnung auf die Fördereinrichtung fällt, wird maßgeblich durch den horizontalen Abstand der Dosierelemente beeinflusst, d.h. je größer der horizontale Abstand zwischen den beiden Dosierelementen ist, desto größere Mengen an Fördergut können pro Zeiteinheit zwischen den Dosierelementen hindurchfließen bzw. -strömen.

Neben den auf unterschiedlichen Höhenniveaus liegenden Dosierelementen und der horizontalen Beabstandung der Dosierelemente zueinander ist die Dreh- oder Rotationsbewegung der Dosierelemente ausschlaggebend dafür, dass mit den Dosierelementen aktiv auf den Fördergutstrom, welcher von der Zuführungsöffnung in Richtung der Austragsöffnung strömt oder fließt, eingewirkt werden kann. Durch die aktive Einwirkung auf den Fördergutstrom in unterschiedlichen Höhen bzw. Schichthöhen können bereits vorhandene Verklumpungen des Fördergutes oder Knäuel von Fördergut zumindest teilweise gelöst oder aufgelockert oder ineinander verhakte Bauteile getrennt oder vereinzelt werden. Ziel ist es, dass an der Austragsöffnung des Aufnahmebehälters, vorzugsweise über den gesamten Austragsquerschnitt, ein gleichmäßiger und fortlaufender Fördergutstrom ausgegeben wird. Nur so kann nachfolgenden Behandlungs- oder Arbeitsstationen definierte Fördergutmengen pro Zeiteinheit zugeführt werden.

In einer bevorzugten Ausführungsform weist die Druckentlastungs- und Dosiereinrichtung zumindest ein drittes balkenförmiges Dosierelement und/oder weitere balkenförmige Dosierelemente auf. Abhängig vom Fördergut sowie von der Bauform und Größe des Aufnahmebehälters können mehr als zwei balkenförmige Dosierelemente vorgesehen sein. Die mehreren Dosierelemente dienen jedoch nicht dazu, die Austragsöffnung in einer Ruhestellung bzw. Ausgangsstellung abzusperren bzw. zu verschließen, sondern stellen geeignete Mittel dar, um einen möglichst gleichmäßigen und kontinuierlichen Fördergutstrom zu erhalten. Das dritte und jedes weitere balkenförmige Dosierelement ist ebenfalls um seine Längsachse motorisch antreibbar, und zwar vorzugsweise unabhängig von dem ersten und zweiten Dosierelement, so dass für jedes Dosierelement die Drehrichtung und/oder Drehgeschwindigkeit und/oder Drehwinkel separat einstellbar ist. So kann es beispielsweise von Vorteil sein, dass das erste und dritte Dosierelement sich im Uhrzeigersinn drehen, während sich das zweite Dosierelement gegen den Uhrzeigersinn dreht.

In einer bevorzugten Ausführungsform sind das erste, zweite und dritte und ggf. jedes weitere balkenförmige Dosierelement auf unterschiedlichen Höhenniveaus oder -lagen im Aufnahmebehälter angeordnet, d.h. das erste Dosierelement weist eine erste Höhe, das zweite Dosierelemente eine zweite Höhe und das dritte Dosierelemente eine dritte Höhe auf, wobei die erste, zweite und dritte Höhe sich voneinander unterscheiden. Hierbei kann das dritte Dosierelement horizontal beabstandet von dem ersten und/oder zweiten Dosierelement angeordnet sein. In einer alternativen Ausführungsform kann sich das dritte Dosierelement auch auf der Höhe des ersten Dosierelements oder des zweiten Dosierelements befinden, jedoch horizontal beabstandet von demjenigen Dosierelement. Die Druckentlastungs- und Dosiereinrichtung weist somit mindestens zwei, vorzugsweise drei oder mehrere, Dosierelemente auf. Vorteilhafterweise sind die Längsachsen der Dosierelemente allesamt horizontal angeordnet. Ferner sind die Längsachsen der Dosierelemente parallel zueinander angeordnet. Die Anzahl der Dosierelemente sowie die Anordnung der Dosierelemente innerhalb des Aufnahmebehälters kann von jeweiligen Anwendungsfall des Austragungssystems abhängig sein.

Gemäß einer bevorzugten Ausführungsform ist das jeweilige Dosierelement durch einen balkenförmigen Profilkörper mit einer polygonen, viereckigen, rechteckigen, quadratischen, ovalen, halbrunden oder kreisabschnittsförmigen Querschnitt gebildet. Es hat sich gezeigt, dass Dosierelemente mit einem unrunden bzw. eckigen Querschnitt besonders effektiv auf das Fördergut innerhalb des Aufnahmebehälters einwirken können. Die Profilkörper können dabei als Rohr- oder Vollprofil ausgebildet sein und zumindest teilweise aus Metall, Kunststoff, insbesondere faserverstärkten Kunststoff, Keramik, Titan oder einem Verbundwerkstoff bestehen. Auch die Verwendung von Nichteisenmetallen ist möglich. Die Profilkörper können auch mit einer Beschichtung versehen sein und/oder eine Profilierung, wie z.B. Zacken, Noppen, Rillen, etc. aufweisen.

Eine gleichmäßige und kontinuierliche Entnahmemöglichkeit von Fördergut über den gesamten Austragsquerschnitt der Austragsöffnung des Aufnahmebehälters kann insbesondere dann gewährleistet werden, wenn das Fördergut kontinuierlich fließt bzw. strömt. Dies kann erreicht werden, indem das jeweilige Dosierelement um dessen Längsachse oszillierend antreibbar ist. Die Oszillationsbewegung kann dabei durch geeignete Steuerung eingestellt werden. Vorteilhafterweise führen die Dosierelemente im Gebrauchszustand eine oszillierende Bewegung aus, wobei die Oszillationsbewegung des jeweiligen Dosierelements ausgehend von der Ruhelage des Dosierelements im Winkelbereich zwischen -135 Grad und 135 Grad, vorzugsweise zwischen -90 Grad und 90 Grad, insbesondere zwischen -60 Grad und 60 Grad, liegt. Denkbar ist jedoch auch, dass das jeweilige Dosierelement um dessen Längsachse vollständig rotierend antreibbar ist.

Zur Steuerung der Dosierelemente ist eine Steuereinheit vorgesehen, mittels derer die Drehgeschwindigkeit und/oder die Drehrichtung und/oder der Drehwinkel der Dosierelemente individuell einstellbar ist, d.h. jedes Dosierelement kann von der Steuerung einzeln angesteuert werden, so dass die Oszillations- oder Dreh- bzw. Rotationsbewegung unabhängig voneinander eingestellt werden kann.

Beispielsweise kann die Dreh- bzw. Rotationsbewegung der Dosierelemente so gesteuert werden, dass sich diese im Gebrauchszustand allesamt in gleicher Drehrichtung drehen, allerdings können die Dosierelemente auch gegenläufig angetrieben werden, so dass sich das erste Dosierelement im Uhrzeigersinn und das zweite Dosierelement gegen den Uhrzeigersinn dreht. Auch ist es möglich, dass das zumindest erste und zweite Dosierelement mit gleicher oder unterschiedlicher Dreh- oder Rotationsgeschwindigkeit angetrieben werden.

Bevorzugter Weise umfasst das Austragungssystem wenigstens eine Antriebseinheit, mit welcher die Dosierelemente motorisch antreibbar sind. Bei der Antriebseinheit kann es sich beispielsweise um einen Schrittmotor, Elektromotor, Servomotor oder ähnliche Antriebsmittel handeln. Vorzugsweise ist eine Antriebseinheit vorgesehen, mittels derer die Dosierelemente unabhängig voneinander antreibbar sind. Denkbar wäre jedoch auch, für jedes Dosierelement eine eigenständige Antriebseinheit vorzusehen.

Um das aus dem Aufnahmebehälter austretenden bzw. abfallende Fördergut weiteren Verarbeitungs- oder Behandlungs- oder Arbeitsstationen, wie z.B. Schmelzöfen mit unterschiedlichen Temperaturzonen zufördern zu können, weist das Austragungssystem eine Fördereinrichtung mit zumindest einem Förderband, insbesondere Plattenförderband oder Plattenband, auf. Plattenbänder sind dabei bei schweren Betriebsbedingungen gut einsetzbar und eignen sich unter anderem für stückige und kantige Fördergüter.

Zur weiteren Vergleichmäßigung oder Entzerrung oder Vereinzelung des Fördergutstroms ist an der Fördereinrichtung zumindest eine Haspelwelle positioniert bzw. angeordnet. Die Haspelwelle ist dabei über der Transportebene der Fördereinrichtung angeordnet, und zwar derart, dass die Haspelwelle das auf dem Förderband transportierte Fördergut auflockern und vereinzeln kann. Besonders bevorzugt befindet sich die Haspelwelle im Abwurfbereich des Förderbands, d.h. im Bereich, an dem das Fördergut vom Förderband abgeworfen wird. Ohne eine Haspelwelle, insbesondere am Abwurfbereich des Förderbands, würde das Fördergut nicht gleichmäßig abfallen, weil es oftmals noch ineinander verhakt ist. Es würde auf dem Förderband weit vorfahren und erst sehr spät in großen Klumpen oder Knäuel abbrechen. Mittels der Haspelwelle wird dies verhindert, indem die Haspelwelle den Fördergutstrom weiter vereinzelt und vergleich mäßigt und zusammenhängende Fördergüter voneinander trennt. Durch die Kombination einer Fördereinrichtung mit zumindest einer Haspelwelle und einem Aufnahmebehälter mit dem erfindungsgemäßen Druckentlastungs- und Dosiersystem wird ein Austragungssystem bereitgestellt, welches eine besonders hohe Dosiergenauigkeit, insbesondere bei Fördergut mit schwierigen Fließeigenschaften, gewährleistet.

Besonders bevorzugt weist das Austragungssystem zudem eine Positioniereinrichtung auf, mittels derer die Position der zumindest einen Haspelwelle einstellbar ist. Hierzu weist die Positioniereinrichtung Mittel auf, durch welche die Höhe der Haspelwelle eingestellt werden kann und/oder die Haspelwelle horizontal verschoben bzw. verfahren werden kann. Einerseits kann mittels der Positioniereinrichtung die Haspelwelle an unterschiedlichste Fördergüter angepasst werden, anderseits kann die Menge des Förderguts, welche von der Fördereinrichtung abgeworfen wird, beeinflusst werden. Die Dosiergenauigkeit des Austragungssystems kann somit nochmals erhöht werden.

Das Austragungssystem kann dabei vorzugsweise auf einem separaten Unterbau in der Form einer Stützkonstruktion oder Rahmenkonstruktion platziert werden. Zur Steuerung des Austragungssystems hat sich als vorteilhaft gezeigt, dass der gesamte Bunker samt Austragungssystem und/oder Unterbau auf Wägezellen gelagert ist.

Weiterbildungen, Vorteile und Anwendungsmöglichkeiten der Erfindung ergeben sich auch aus der nachfolgenden Beschreibung von Ausführungsbeispielen und aus den

Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: eine perspektivische Ansicht eines erfindungsgemäßen Austragungssystems zum Austragen von Fördergut, insbesondere Elektro- und Elektronikschrott und
- Fig. 2: einen vertikalen Querschnitt durch das Austragungssystem gemäß Figur 1.

### Wege zur Ausführung der Erfindung

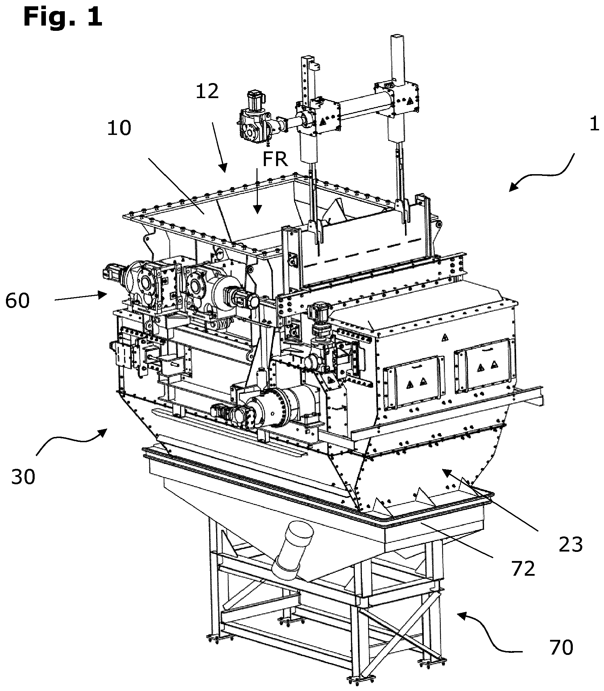

In Fig. 1 ist mit dem Bezugszeichen 1 ein Austragungssystem zum Austragen von Fördergut, insbesondere Elektro- und Elektronikschrott, aus einem Bunker bzw. Bunkerbehälter gezeigt. Als Bunker oder Bunkerbehälter sind im Sinne der Erfindung Aufbewahrungs- oder Sammelbehälter, vorzugsweise Großbehälter, zum meist temporären Aufbewahren oder "Bunkern" von Fördergut zu verstehen. Wird ein Bunker zum Beschicken einer Anlage oder einer Maschine eingesetzt, ist zum Ausbringen des Förderguts eine Austragungsvorrichtung zum Austragen des Förderguts aus dem Bunker erforderlich.

Im Recyclingbereich, insbesondere bei Sortier- und/oder Aufbereitungsanlagen, haben sich Bunker durch ihre Robustheit, Fassungsvermögen und Bauform etabliert. So werden spezielle Materialien, wie z.B. Glas, Elektro- und Elektronikschrott, Verpackungsabfälle, Metalle, etc., in Bunkern bzw. Bunkerbehälter gesammelt, aufbewahrt und entladen. Die aus dem Bunker entladenen Fördergüter werden beim Recycling weiteren Stationen, wie Sortier- und/oder Aufbereitungsanlagen, Schreddern oder Schmelzöfen mit unterschiedlichen Hitze- oder Temperaturzonen zugeführt. Dabei gilt, je dosierter das Fördergut aus dem Bunker mittels der Austragsvorrichtung ausgegeben werden kann, umso so besser kann das Fördergut von den nachfolgenden Stationen verarbeitet bzw. verwertet werden. Die dosierte Ausgabe des Förderguts spielt daher insbesondere beim Recycling von Materialien eine große Rolle.

Besonders schwierig gestaltet sich die Ausgabe von Elektro- und Elektronikschrott, wie z.B. elektronische Bauteile, wie bestückte Leiterplatten, insbesondere bestückte Leiterplatten bis zu einer Kantenlänge von 150 mm oder kleiner, Altgeräte mit Stromkabel, etc., aus einem Bunker bzw. Bunkerbehälter, da sich diese Bauteile oftmals ineinander verhaken. Das ineinander Verhaken des Elektro- und Elektronikschrotts führt in der Regel dazu, dass sich Bauteilverbände bzw. Verklumpungen des Förderguts bzw. Knäuel von Fördergut bilden. Demzufolge ist ein Austragungssystem erforderlich, dass auch Fördergut mit schwierigen Fließeigenschaften dosiert abgeben kann.

Das erfindungsgemäße Austragungssystem 1 besteht aus einem Aufnahmebehälter 10, der eine beliebige Geometrie aufweisen kann. Der Aufnahmebehälter 10 kann rund, eckig, rechteckig, vieleckig, quadratisch oder oval sein und ist vorzugsweise aus einem beliebigen Material, beispielsweise aus Metall, Kunststoff, Keramik oder einem Verbundmaterial, hergestellt. Der Aufnahmebehälter 10 dient dazu, dass Fördergut aus der Austrittsöffnung des Bunkers bzw. Bunkerbehälter aufzunehmen und dosiert auf die unterhalb des Aufnahmebehälters 10 angeordnete Fördereinrichtung 20 abzugeben.

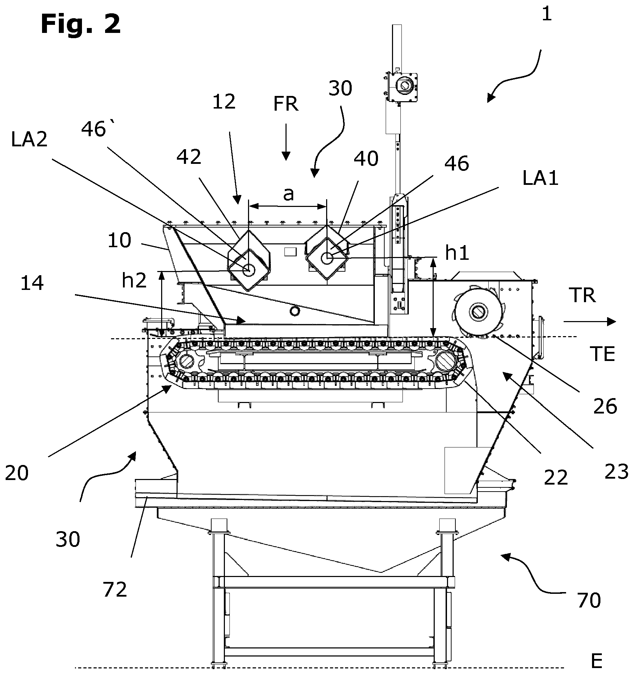

Wie aus Figur 2 ersichtlich ist, weist der Aufnahmebehälter 10 zumindest eine obere Zuführungsöffnung 12, durch welche das Fördergut aus dem Bunker in den Aufnahmebehälter 10 strömen kann, und eine untere Austragsöffnung 14 auf, welche an der der Zuführungsöffnung gegenüberliegenden Seite bzw. an der Unterseite des Aufnahmebehälters 10 angeordnet ist. Demnach fließt bzw. strömt das Fördergut von der Zuführungsöffnung 12 durch den Aufnahmebehälter 10 zur Austragsöffnung 14. Im dargestellten Beispiel wirkt die Schwerkraft auf das Fördergut, was bewirkt, dass das Fördergut entlang der Fließrichtung FR unter Einwirkung der Schwerkraft von der Zuführungsöffnung 12 zur Austragsöffnung 14 fließt. Die Fließrichtung FR des Förderguts ist daher annähernd vertikal bzw. senkrecht zur horizontalen Ebene E. Der Aufnahmebehälter 10 läuft vorzugsweise entlang der Fließrichtung FR trichterförmig zu.

Im Aufnahmebehälter 10 befindet sich zwischen der Zuführungsöffnung 12 und der Austragsöffnung 14, insbesondere im Bereich der oberhalb der Austragsöffnung 14, eine Druckentlastungs- und Dosiersystem 30, um einerseits eine Druckentlastung im Aufnahmebehälter 10 zu erreichen, d.h. den Staudruck im Aufnahmebehälter 10 und/oder Bunker möglichst gering zu halten, und andererseits eine gute Dosierung des Fördergutes zu gewährleisten. Eine gute Dosiergenauigkeit kann insbesondere dann erreicht werden, wenn der Fördergutstrom bzw. Materialstrom gleichmäßig und durchgängig aus der Austragsöffnung 14 austritt bzw. auf die Fördereinrichtung 20 fällt, so dass die Bildung von so genannten Totzonen im Aufnahmebehälter 10 und/oder eine Brückenbildung im Aufnahmebehälter 10 vermieden werden kann.

Das erfindungsgemäße Druckentlastungs- und Dosiersystem 30 besteht zumindest aus einem ersten balkenförmigen Dosierelement 40 und einem zweiten balkenförmigen Dosierelement 42, wobei das erste balkenförmigen Dosierelement 40 um eine erste Längsachse LA1 und das zweite balkenförmigen Dosierelement 42 um eine zweite Längsachse LA2 über eine Antriebseinheit 60 antreibbar sind. Vorteilhafterweise können die beiden Dosierelemente 40, 42 unabhängig voneinander antreibbar ausgebildet sein. Im Falle, dass die Dosierelemente 40, 42 unabhängig voneinander angetrieben werden, sind unterschiedlichste Antriebsmodi einstellbar. Beispielsweise können die Dosierelemente 40, 42 mit unterschiedlicher Drehrichtung und/oder Drehgeschwindigkeiten, synchron oder gegenläufig zueinander angetrieben werden.

In Figur 2 sind beispielhaft ein erstes Dosierelement 40 und ein zweites Dosierelement 42 gezeigt, wobei die Dosierelemente 40, 42 als langgestreckte bzw. längliche, balkenförmige Profilkörper ausgebildet sind. Die Profilkörper können entweder als Rohr- oder Vollprofil ausgebildet sein und bestehen aus einem robusten und widerstandsfähigen Material, wie z.B. Metall, faserverstärkten Kunststoff, vorzugsweise glasfaserverstärkten Kunststoff, Keramik oder Titan.

Figur 2 zeigt beispielhaft einen Dosierelemente 40, 42 mit einem quadratischen Querschnitt 46, 46'. Der Querschnitt 46, 46' der Dosierelemente 40, 42 ist jedoch nicht auf einen quadratischen Querschnitt beschränkt. Vielmehr kommen insbesondere polygone oder eckige Querschnitte 46, 46' Verwendung finden, wie z.B. rechteckige, sechseckige, achteckige, viereckige, halbreisförmige, dreieckige und ovale Querschnitte. Der Querschnitt 46, 46' der jeweiligen Dosierelemente kann dabei identisch sein, jedoch können das erste und zweite Dosierelement 40, 42 auch einen unterschiedlichen Querschnitt 46, 46' aufweisen, der sich beispielsweise nicht nur in der Form, sondern auch der Größe unterscheidet.

Erfindungsgemäß sind das erste balkenförmige Dosierelement 40 und zweite balkenförmige Dosierelement 42 horizontal beabstandet zueinander, auf unterschiedlichen Höhenniveaus bzw. -lagen im Aufnahmebehälter 10 angeordnet. Die Dosierelemente 40, 42 sind vorzugsweise parallel zueinander angeordnet, wobei die Längsachsen LA1, LA2 der Dosierelemente 40, 42 jeweils beispielsweise in einer horizontalen Ebene liegen bzw. sich in horizontaler Richtung erstrecken. Im Aufnahmebehälter 10 sind die Dosierelemente 40, 42 drehbar gelagert gehalten bzw. befestigt. Wie aus Figur 2 entnehmbar weist die erste Längsachse LA1 des ersten Dosierelements 40 und die zweite Längsachse LA2 des zweiten Dosierelements 42 in horizontaler Richtung einen Abstand a auf, wobei der Abstand a dem einfachen, vorzugsweise dem doppelten oder dreifachen, Querschnitt eines Dosierelements entspricht. Vorzugweise wird der Abstand a zwischen den Dosierelementen 40, 42 in Abhängigkeit von der Größe, Zusammensetzung, Art, Beschaffenheit des Förderguts gewählt und ist auch manuell oder maschinell einstellbar.

Neben der Beabstandung des ersten balkenförmigen Dosierelements 40 und des zweiten balkenförmigen Dosierelements 42 in horizontaler Richtung, sind diese auf unterschiedlichen Höhenniveaus bzw. in unterschiedlichen Höhenpositionen innerhalb des Aufnahmebehälter 10 angeordnet. Ausgehend von einer horizontalen Ebene E, welche beispielsweise durch die Bodenebene oder durch die horizontal verlaufende Transportebene TE der Fördereinrichtung 20 gebildet sein kann, sind die Dosierelemente 40, 42 auf unterschiedlichen Höhenniveaus angeordnet, d.h. das erste balkenförmige Dosierelement 40 weist in Bezug auf die Transportebene TE eine Höhe h1 auf, während das zweite balkenförmige Dosierelement 42 in Bezug auf die Transportebene TE eine zweite Höhe h2 aufweist, wobei die erste Höhe h1 sich von der zweiten Höhe h2 unterscheidet.

Im vorliegenden Ausführungsbeispiel wird das Höhenniveau von der Transportebene TE aus angegeben, wobei die erste Höhe h1 des ersten Dosierelements 40 größer als die zweite Höhe h2 des zweiten Dosierelements 42 ist. Die Angabe des Höhenniveaus bzw. der Höhenposition könnte jedoch in analoger Weise ausgehend von der horizontal verlaufenden Bodenfläche, der Ebene E, erfolgen. Durch die in unterschiedlichen Höhenlagen angeordneten Dosierelemente 40, 42 kann mit den Dosierelementen 40, 42 in unterschiedlichen Schichthöhen innerhalb des Aufnahmebehälters 10 auf das Fördergut eingewirkt werden. Insbesondere bei bestehenden Verklumpungen oder bei Knäuel des Fördergutes oder ineinander verhakter Bauteile ist die Anordnung der Dosierelemente 40, 42 auf unterschiedlichen Höhenniveaus besonders effizient und wirksam, um die Verklumpungen und Knäuel des Förderguts zu lösen und ineinander verhakte Bauteile wieder zu vereinzeln. Nur, wenn ein gleichmäßiger und vorzugsweise vereinzelter Fördergutstrom vorliegt, kann die geforderte Dosiergenauigkeit des Austragungssystems 1 erreicht werden.

Um Brückenbildung sowie Totzonen innerhalb des Aufnahmebehälters 10 zu verhindern, ist es von besonderer Bedeutung, dass die Dosierelemente 40, 42 motorisch angetrieben werden. Durch die motorische Bewegung der Dosierelemente 40, 42 um ihre Längsachse LA1, LA2 wird erreicht, dass der Fördergutstrom sich ununterbrochen bewegt und das Fördergut gleichmäßig aus der Austragsöffnung 14 des Aufnahmebehälters 10 austritt.

Die Dosierelemente 40, 42 können dabei beispielsweise im Betrieb um ihre Längsachsen LA1, LA2 oszillieren. Die Oszillationsbewegung kann durch eine geeignete Steuerung gesteuert werden, wobei beispielsweise auf den Drehwinkel und die Drehgeschwindigkeit Einfluss genommen werden kann. Als besonders wirksam hat sich bei der oszillierenden Bewegung der Dosierelemente 40, 42 ausgehend von der Ruhelage des jeweiligen Dosierelements 40, 42 ein Winkelbereich zwischen - +135 Grad, vorzugsweise -+90 Grad, insbesondere -+60 Grad, herausgestellt. Optional können die Dosierelemente 40, 42 im Betrieb um deren Längsachse LA1, LA2 auch vollständig rotieren. Die Oszillationsbewegung oder Dreh- bzw. Rotationsbewegung stellt eine gleichmäßige und kontinuierliche Entnahmemöglichkeit über die Austragsöffnung 14 des Aufnahmebehälter 10 sicher. Zum Antrieb der Dosierelemente 40, 42 ist zumindest eine Antriebseinheit 60 vorgesehen. Optional kann auch jedem Dosierelement 40, 42 eine eigenständige Antriebseinheit 60 zugeordnet sein.

Ferner weist das Austragungssystem 1 zumindest eine horizontal angeordnete Fördereinrichtung 20 auf, welche in Fließrichtung FR unterhalb der Austragsöffnung 14 des Aufnahmebehälters 10 angeordnet ist und welche dazu dient, dass aus der Austragsöffnung 14 abfallende Fördergut weg zu fördern. Die Fördereinrichtung 20 weist dabei zumindest ein Förderband 22 mit einer Transportfläche zum Befördern des Förderguts auf, wobei der Transport des Förderguts auf der Transportfläche in horizontaler Richtung erfolgt, nämlich entlang einer horizontalen Transportebene TE in einer Förder- oder Transportrichtung TR. Die Fördereinrichtung 20 muss jedoch nicht zwangsweise horizontal angeordnet sein, sondern kann auch eine geringe Neigung gegenüber der horizontalen Ebene E aufweisen. Als Förderband 22 kommt insbesondere ein endlos umlaufendes Förderband in Betracht, wobei sich Plattenförderbänder oder Plattenbänder besonders eignen.

Mittels der Fördereinrichtung 20 wird das entladene Fördergut weiteren Verarbeitungs- oder Bearbeitungs- bzw. Behandlungsstationen zugeführt. Im Recyclingbereich können diese an das Austragungssystem 1 anschließende Stationen beispielsweise Sortier- und/oder Aufbereitungsanlagen, Zerkleinerungsanlagen oder Schmelzöfen mit unterschiedlichen Hitze- oder Temperaturzonen sein.

Zusätzlich kann der Fördereinrichtung 20 zumindest eine Haspelwelle 26 zugeordnet sein, welche dazu ausgebildet ist, dass auf dem Förderband 22 noch ineinander verhakte Fördergut weiter zu vereinzeln oder zu vergleichmäßigen, so dass das Fördergut gleichmäßig und mit hoher Dosiergenauigkeit vom Förderband abgeworfen werden kann. Demnach ist die Haspelwelle 26 dazu ausgebildet, noch ineinander verhaktes Fördergut, ggf. auch Verklumpungen oder Knäuel des Förderguts, vor dem Abwurf zu trennen, indem die Haspelwelle einzelne Fördergüter, wie z.B. einzelne Leiterplatten oder Platinen, herausreißt oder diese voneinander trennt.

Wie aus Figur 2 ersichtlich ist die Haspelwelle 26 oberhalb der Fördereinrichtung 20, und zwar in einem Abwurfbereich 23 des Förderbandes 22. Die Haspelwelle 26 weist dabei eine Längsachse auf, um welche die Haspelwelle 26 motorisch antreibbar ist, wobei die Längsachse der Haspelwelle 26 vorzugsweise senkrecht zur Transportrichtung TR bzw. parallel zur Transportebene TE ausgerichtet ist. Um den gesamten Fördergutstrom auflockern und vereinzeln zu können, erstreckt sich die Haspelwelle 26 nahezu über die gesamte Breite des Förderbands 22.

Das Austragungssystem 1 weist ferner eine Positioniereinrichtung auf, mittels derer die Position der zumindest einen Haspelwelle 26 manuell, halbautomatisiert oder vollständig automatisiert einstellbar ist. Die Positioniereinrichtung weist dabei Mittel auf, durch welche die Haspelwelle 26 in vertikaler Richtung bzw. in der Höhe verstellt werden kann. Zudem können Mittel vorgesehen sein, mit denen die Haspelwelle 26 senkrecht zur Transportrichtung TR des Förderbands bzw. in Längsrichtung der Haspelwelle 26 vor- und zurückverfahren oder hin und her verschoben werden kann.

In einer nicht in den Figuren dargestellten weiteren Ausführungsform umfasst das Druckentlastungs- und Dosiersystem 30 zumindest ein drittes balkenförmiges Dosierelement, welches ebenfalls um dessen Längsachse motorisch antreibbar ist. Das dritte Dosierelement kann gegenüber dem ersten und zweiten Dosierelement 40, 42 auf unterschiedlichste Art und Weise angeordnet sein. In einer bevorzugten Ausführungsform sind das erste, zweite und dritte balkenförmige Dosierelement auf unterschiedlichen Höhenniveaus oder -lagen im Aufnahmebehälter 10 angeordnet, d.h. das erste Dosierelement 40 weist eine erste Höhe h1, das zweite Dosierelemente 42 eine zweite Höhe h2 und das dritte Dosierelemente eine dritte Höhe auf, wobei die erste, zweite und dritte Höhe sich voneinander unterscheiden. Demzufolge wird mittels der Dosierelemente in unterschiedlichen Schichthöhen, nämlich drei unterschiedlichen Höhen, auf das Fördergut eingewirkt. Dabei kann das dritte Dosierelement horizontal beabstandet zum ersten und/oder zweiten Dosierelement 40, 42 angeordnet sein. Das Druckentlastungs- und Dosiersystem 30 ist nicht auf zwei oder drei Dosierelemente 40, 42 beschränkt, es können auch vier oder mehrere balkenförmige Dosierelemente vorgesehen sein.

Wie aus den Figuren 1 und 2 gezeigt ist, kann ein Unterbau 70 in der Form einer Unter- bzw. Rahmenkonstruktion vorgesehen sein, welche eine Aufnahmefläche 72 zur Aufnahme des erfindungsgemäßen Austragungssystems 1 aufweist. Um den Füllstand des Bunkers bzw. Bunkerbehälter überwachen und erfassen zu können, kann der ganze Bunker samt Austragungssystem 1 auf Wägezellen gelagert sein.

### Bezugszeichenliste

- 1: Austragungssystem
- 10: Aufnahmebehälter
- 12: Zuführungsöffnung
- 14: Austragsöffnung
- 20: Fördereinrichtung
- 22: Förderband
- 23: Abwurfbereich
- 24: Transportebene
- 26: Haspelwelle
- 30: Druckentlastungs- und Dosiersystem
- 40: erstes Dosierelement
- 42: zweites Dosierelement
- 46,46': Querschnitt
- 60: Antriebseinheit
- 70: Unterbau
- 72: Auflagefläche des Unterbaus

- FR: Fließrichtung
- TR: Transportrichtung
- TE: horizontale Transportebene
- LA1: erste Längsachse
- LA2: zweite Längsachse
- h1: erste Höhe
- h2: zweite Höhe
- a: Abstand
- E: horizontale Ebene

## Patentansprüche

1. Austragungssystem (1) zum Austragen von Fördergut, insbesondere Elektro- und Elektronikschrott, aus einem Bunkerbehälter, umfassend einen Aufnahmebehälter (10) zur Aufnahme von Fördergut aus dem Bunkerbehälter mit einer oberen Zuführungsöffnung (12) und einer dieser gegenüberliegenden, unteren Austragsöffnung (14), zumindest eine unterhalb der Austragsöffnung (14) angeordnete, vorzugsweise horizontale, Fördereinrichtung (20) zum Abfördern des aus der Austragsöffnung (14) des Aufnahmebehälters (10) austretenden Förderguts und eine Druckentlastungs- und Dosiereinrichtung (30) zur Druckentlastung im Aufnahmebehälter (10) sowie zur Dosierung und/oder Vereinzelung des Förderguts, wobei die Druckentlastungs- und Dosiereinrichtung (30) zumindest ein erstes balkenförmiges Dosierelement (40) und zweites balkenförmiges Dosierelement (42) aufweist, die im Aufnahmebehälter (10) zwischen der Zuführungsöffnung (12) und der Austragsöffnung (14), insbesondere im Bereich oberhalb der Austragsöffnung (14), angeordnet sind, wobei das erste balkenförmige Dosierelement (40) um eine erste Längsachse (LA1) und das zweite balkenförmige Dosierelement (42) um eine zweite Längsachse (LA2) motorisch antreibbar sind, und zwar vorzugsweise unabhängig voneinander, und wobei das erste und zweite balkenförmige Dosierelement (40, 42) horizontal beabstandet zueinander, auf unterschiedlichen Höhenniveaus im Aufnahmebehälter (10) angeordnet sind.

2. Austragungssystem (1) nach Anspruch 1, **dadurch gekennzeichnet, dass** die Druckentlastungs- und Dosiereinrichtung (30) zumindest ein weiteres balkenförmiges Dosierelement aufweist.

3. Austragungssystem (1) nach Anspruch 1 oder 2, **dadurch gekennzeichnet, dass** das jeweilige balkenförmige Dosierelement (40, 42) einen balkenförmigen Profilkörper mit einer polygonen, viereckigen, rechteckigen, quadratischen, ovalen, halbrunden oder kreisabschnittsförmigen Querschnitt (46, 46') aufweist.

4. Austragungssystem (1) nach einem der Ansprüche 1 bis 3, **dadurch gekennzeichnet, dass** das jeweilige balkenförmige Dosierelement (40, 42) um die jeweilige Längsachse (LA1, LA2) oszillierend antreibbar ist.

5. Austragungssystem (1) nach einem der Ansprüche 1 bis 3, **dadurch gekennzeichnet, dass** das jeweilige Dosierelement (40, 42) um die jeweilige Längsachse (LA1, LA2) vollständig rotierend antreibbar ist.

6. Austragungssystem (1) nach einem der vorherigen Ansprüche, **dadurch gekennzeichnet, dass** das Austragungssystem (1) wenigstens eine Antriebseinheit (60) aufweist, mit welcher die Dosierelemente (40, 42) motorisch antreibbar sind.

7. Austragungssystem (1) nach einem der vorherigen Ansprüche, **dadurch gekennzeichnet, dass** die erste Längsachse (LA1) des ersten Dosierelements (40) und die zweite Längsachse (LA2) des zweiten Dosierelements (42) in unterschiedlichen horizontalen Ebenen und/oder parallel zueinander angeordnet sind.

8. Austragungssystem (1) nach einem der vorherigen Ansprüche, **dadurch gekennzeichnet, dass** das erste Dosierelement (40) und das zweite Dosierelement (42) in horizontaler Richtung einen Abstand (a) aufweisen, wobei der Abstand (a) größer ist als der Querschnitt (46, 46') eines Dosierelements (40, 42), vorzugsweise dem doppelten oder dreifachen Querschnitt (46, 46') eines Dosierelements (40, 42) entspricht.

9. Austragungssystem (1) nach einem der vorherigen Ansprüche, **dadurch gekennzeichnet, dass** eine Steuereinheit vorgesehen ist, mittels der die Drehgeschwindigkeit und/oder die Drehrichtung und/oder der Drehwinkel der Dosierelemente (40, 42) individuell einstellbar ist.

10. Austragungssystem (1) nach einem der vorherigen Ansprüche, **dadurch gekennzeichnet, dass** die Fördereinrichtung (20) unterhalb der Austragsöffnung (14) angeordnet und/oder durch zumindest ein, vorzugsweise umlaufendes, Förderband (22), insbesondere Plattenförderband oder Plattenband gebildet ist.

11. Austragungssystem (1) nach einem der vorherigen Ansprüche, **dadurch gekennzeichnet, dass** die Fördereinrichtung (20) einen Abwurfbereich (23) aufweist, indem zumindest eine Haspelwelle (26) zur Vereinzelung und/oder Entzerrung des Förderguts angeordnet ist.

12. Austragungssystem (1) nach Anspruch 11, **dadurch gekennzeichnet, dass** eine Positioniereinrichtung zur Positionierung der Haspelwelle (26) in Bezug auf die Fördereinrichtung (20) vorgesehen ist.

13. Austragungssystem (1) nach Anspruch 12, **dadurch gekennzeichnet, dass** die Positioniereinrichtung Mittel aufweist, mittels der die Höhe der Haspelwelle und/oder die horizontale Ausrichtung der Haspelwelle (26) einstellbar ist.
